# EUROPEAN PATENT SPECIFICATION

(11) **EP 0 544 818 B1**
(45) Date of publication and mention of the grant of the patent: **22.09.1999**
(21) Application number: 91917317.9
(22) Date of filing: 23.07.1991
(51) Int. Cl.: G09G 5/34, G09G 3/14

(54) **VIDEO MOVING MESSAGE DISPLAY**
GERÄT ZUR ANZEIGE VON VIDEOLAUFBILDERN
AFFICHAGE DE MESSAGE VIDEO MOBILE

(30) Priority: 21.08.1990 US 570914
(43) Date of publication of application: 09.06.1993
(73) Proprietor: IMTECH INTERNATIONAL, INC., New York New York 10013 (US)
(72) Inventor: NOBLE, Paul, New York, NY 10028 (US); GEYER, Richard, Keyport, NJ 07735 (US)
(74) Representative: Johnstone, Helen Margaret
(86) International application number: US9105181
(87) International publication number: WO9203817

(56) References cited:
- EP-A- 0 250 123
- WO-A-91/07739
- US-A- 4 737 778
- US-A- 4 943 866
- US-A- 4 999 709
- US-A- 5 021 772

## Description

### BACKGROUND OF THE INVENTION

A moving message display method and apparatus is described in U.S. Patent Nos. 5657046, 5712655 and 5010413, all of which are commonly owned by the assignee of the present application. The teachings of these patents are incorporated herein by reference.

U.S. Patent No. 4, 746,981, also assigned to the same assignee, discloses the use of a plurality of stacked television receivers or monitors to display a larger composite image. It is directed to overcoming a problem which arises from improper spatial presentation of lines due to interlace. U.S. Patent No. 5010413 provides a technique which minimizes the unpleasant effect from blanking lines.

From the teaching of U.S. Patent Serial Nos. 5657045 and 5712655, moving message display systems are limited by a fixed number of monitors, as exemplified by forming a composite image across a fixed number of stacked monitors. That is, the controlling software which transfers an image from one monitor to the next must be customized for some upper limit of monitors. Adding additional monitors to the message display system beyond this upper limit is troublesome, insofar as the software needs modification to accommodate the larger number of monitors.

In addition, the image is expanded and then split up across all the fixed monitors. Any variation in the number of monitors must be accomodated by the software and, further, the resolution of the image displayed is not as good as it would be if the image were not expanded but rather displayed for the size of a single monitor.

Further, changing the stacking relationship of the monitors would require revising the software to expand the image to conform to the revised stacking relationship. For instance, if four monitors are side by side and their stacking is changed to form a square, the expanded image will need to be changed as well by software. In addition, expanding the image to a larger size means that the central graphics computer must be that much faster to keep track of and process the expanded images. Unfortunately, there is a further limit to the amount of data that can be handled by a computer at its fastest rate of processing speed. This limits the number of monitors which may be utilized in an array.

It would therefore be desireable to provide a video moving message system which may accommodate any number of monitors without requiring modification of software, such modification being otherwise required to change the upper limit of the number of monitors capable of being handled by the software. It would further be desirable to improve the resolution of the image displayed on all monitors to that which would arise if the image were displayed by a single monitor.

### SUMMARY OF THE INVENTION

The present invention is directed to a video moving message display systems, comprising:
means for generating image data;
a plurality of video monitors (1);
a plurality of video modules (2) each in communication with at least a respective one of said display monitors; and
means for transferring the image data from one of said video modules (2) to the next in succession by reassigning counters (5,6) through which the image data is accessed to form the image, aid video modules successively displaying an image based on the transferred image data so that said image scrolls from one video monitor (1) to the next in succession, said transferring means being independent of said generating means when transferring the image data.

Each module is composed of a microcontroller, video memory, row and column counters, memory digital to display analog converters and display monitor. There is still image data stored in a matrix in memory an dis accessible via the counters from row and column addresses in each individual module. The image data is read out of memory and displayed as an image at corresponding pixels of a monitor screen. The counters are then reassigned during a blanking interval of the monitor, which causes the image to appear to shift on the monitor screen after the reassignment as the image data is displayed on the monitor.

Preferably, a series of monitors are arranged side by side or one over the other so that the image data is scrolled from one monitor to the next. By arranging the monitors both side by side and one over the other, the image data may be scrolled from one monitor to the next either up and down or left and right.

A complete scrolling system may be obtained with one graphics generating computer at the head end of a series of video display modules. The graphics computer should be capable of generating streams of video text and/or images as a sequence of single still video images or pages. By serializing these pages one row or column at a time and transmitting the pixelized data to the first video display module in the sequence, the series of modules in sequence may appear to depict one single and fluid moving image as a whole.

Alternatively, each individual video display module may be capable of generating a preprogrammed sequence of graphics screens which may be sequenced and controlled by a master computer or module through the serial links.

The image data may be transferred between the video modules in succession either by the means which supplies the image data or independent of it, i.e., transference is done by the video modules themselves. An image is generated based on the image data and is displayed on the video monitors and scrolled from one display monitor to the next successively. An image is transferred from one monitor to the next independent of the number of monitors present in the moving message system.

In this manner, the number of video monitors employed may be varied at will and the resolution of the image being displayed is that for a single monitor since the image stored in memory is shown on a single monitor and scrolled from one to the next, rather than expanding an image from memory to fit the entire display across multiple monitors.

Expansion of the image stored in memory may therefore be avoided. Resolution and graphic of the image on each monitor is the same as that for the graphic computer source. By serially linking the monitors there is no real limit to the number of monitors which may be used in any array, because the image is scrolled across each monitor independent of the graphic computer source. That is, each video module is capable of transferring the image data to the next video module in succession on its own.

### BRIEF DESCRIPTION OF THE DRAWINGS

For a better understanding of the present invention, the scope of the invention is set forth in the appended claims and reference is made to the following description and accompanying drawings, of which:

Fig. 1 is a block diagram of a video scrolling module in accordance with the present invention.

Fig. 2 is a schematic representation of a video display for normal scanning.

Figs. 3-5 are schematic representations of a video image as stored in random access memory in accordance with the invention.

Figs. 6-8 are schematic representations of the video image of Figs. 3-5, respectively, on a monitor screen after horizontal scrolling by manipulating column display counters in accordance with the invention.

Figs. 9 and 10 are schematic representations of vertical and horizontal scrolling modes, respectively.

Fig. 11 is a block diagram of the overall arrangement of multiple video scroll modules interconnected with each other, each video scroll module being of the type of Fig. 1.

Fig. 12 is a block diagram of each video module of Fig. 11.

Fig. 13 is a block diagram of the programmable gate array of Fig. 12.

Fig. 14 is a block diagram of the video display RAM of Fig. 12.

### DESCRIPTION OF THE PREFERRED EMBODIMENT

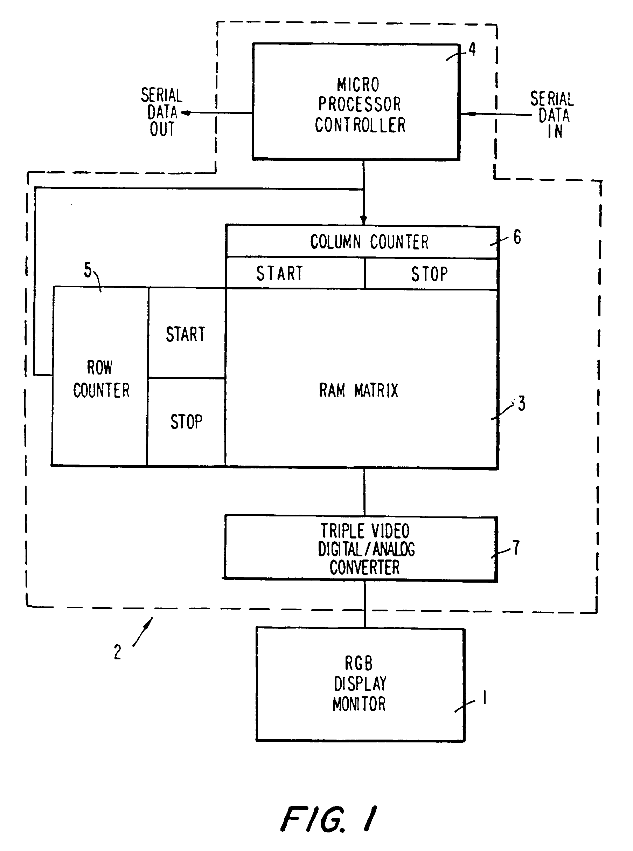

Fig. 1 is a block diagram of a video module, which includes a standard analog RGB (red, green, blue) video monitor 1 with an attached hardware processing unit 2. The hardware processing unit 2 contains a block of video displaying random access memory (RAM) 3, a microprocessor control unit 4, random access memory counters 5,6 for row and column, and three digital to analog converters 7 to drive the three color guns of the RGB video display monitor 1. Fig. 1 shows the direction of serial data entering and leaving the microprocessor control unit 4, which serializes this data as image data stored within a matrix represented by columns and rows in RAM 3. The image data is in the form of binary code, i.e., in digital form.

A video module is capable of storing and displaying one complete static video frame continuously. The video RAM in each module is arranged in a two dimensional matrix with x and y coordinates matching the same coordinates on the monitor screen such that each pixel location on the monitor screen is stored in a corresponding location in RAM memory. Color graphic images may be stored by several different methods. The most common method is to store within an RGB display system where each pixel is stored as separate red, green and blue component. Any pixel color may be created by mixing the appropriate quantities of red, green and blue. Other methods include storing each pixel as digitized composite video, chrominance and luminance, color difference signals or other color component schemes. Any of these methods may be used as the storage medium in the moving message system; it is advantageous to use the same method used for image storage in the source graphics computer.

In an RGB graphics based system, each display module has three identical matrices of RAM, one for each color. Each color component is stored in RAM as a number that represents the percentage of that color in one pixel location. The number of bits of RAM data used to store each of the RGB components determines the maximum number of different color combinations (palette) available for each pixel. Each video module uses 8 bits to store each of the RGB components giving over 16 million possible color combinations. Other data widths are possible for use with different qualities of graphics generators. The video display RAM is accessed through two sets of programmable address counters 5,6, one counter 5 for the matrix row address and one counter 6 for the matrix column address.

Display pixel resolution is determined by several factors. Horizontal pixel resolution is governed by the system digitizing clock rate. A higher system clock will result in more pixels per line. The number of pixel lines per screen is determined by the horizontal scan rate. A majority of applications may use video monitors that require an NTSC scan rate of 15.7 KHz, giving video fields of 262.5 lines each. Of the 262.5 lines, only approximately 240 in each field are visible on the monitor face. In normal broadcast television NTSC, each video frame is composed of two interlaced fields which are displayed a sixtieth of a second apart to compose one frame of 525 lines, thirty times a second.

Many graphic video systems use a normal NTSC scan rate but output a noninterlaced video image. To achieve this, the same video field is shown twice in a row with no offset between them giving a visual image of approximately 240 lines.

The hardware description following uses a clock rate of 7.159 MHZ, which gives a pixel width of approximately 14 microseconds and 360 pixels per line. Higher horizontal resolution is achieved by increasing the clock rate. An NTSC sync generator is used to produce a noninterlaced display of 240 lines. Normal interlaced video or images of greater than 240 lines may be displayed by the addition of more video RAM, and adjusting the horizontal scan rate.

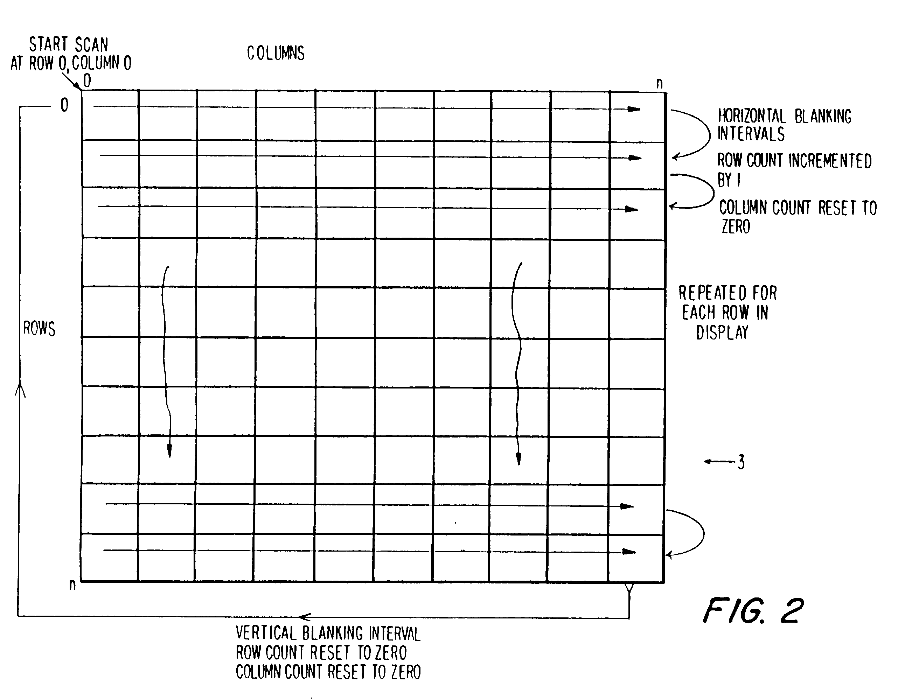

Each frame is displayed or transferred from the video RAM 3 to the monitor 5 thirty times a second. By incrementing the column address counter 6 once for each output pixel, the video RAM 3 is read from left to right along each row. At the end of the last row, the column address count is reset to the first column and the row address counter is incremented by one. At the end of the last row, both the column address and the row address counters are reset back to the first RAM address to start another frame scan as illustrated in Fig. 2.

For the sake of clarity and simplification, Figs. 2-6 illustrate an application for a video module with a resolution of ten horizontal columns and ten vertical rows. In practice, however, the resolution may be at least 360 horizontal by 240 vertical pixels. The same principles discussed for the 10 X 10 pixel matrix resolution are equally applicable to the 360 X 240 pixel matrix resolution.

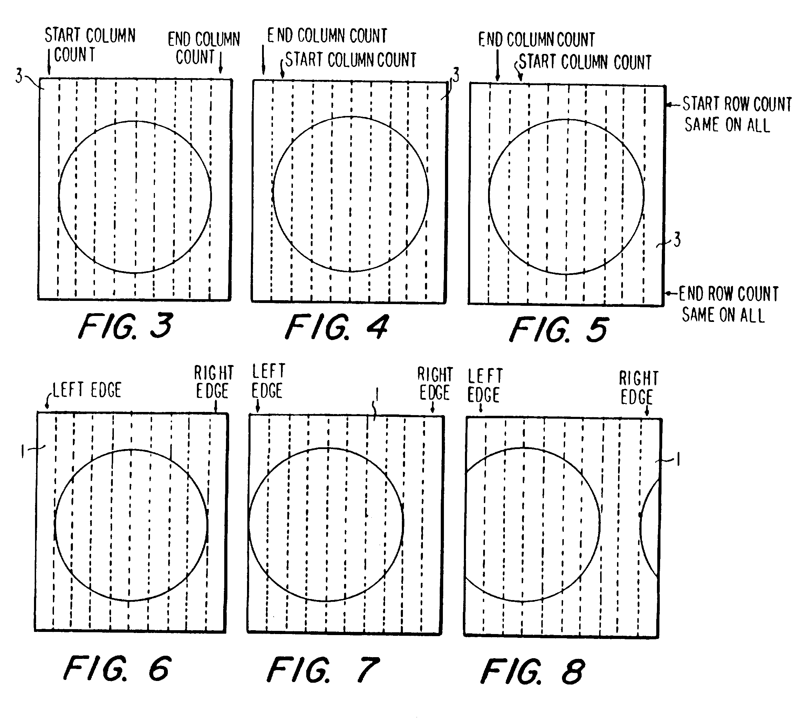

Both the row and column counters are programable as concerns start address, stop address, and length of count sequence. The counters can be set to roll over back to zero count when a preset maximum count is reached. By manipulating the column start and stop address counters during an active display period, a complete image which is stored and centered within the video RAM matrix will shift its position to the left or right relative to the monitor screen and the image edges roll around to the opposite side of the display monitor as seen in Figs. 3-8. By manipulating the row start and stop address counters, such a complete image shifts its position up or down relative to the monitor screen with the image going over the top edge and appearing on the bottom and vice versa.

Figs. 3-5 show a video image as stored in the random access memory matrix. Fig. 6 shows the same image as displayed on the RGB video display monitor 7 without any shift by columns or rows. Fig. 7 shows that by reassigning the end and start column counts to the right as in Fig. 4 in comparison to that of Fig. 3, the video image is shifted by columns to the left as compared to the unshifted video image of Fig. 6. Fig. 8 shows that by reassigning the end and start column counts further to the right in Fig. 5 as compared to that of Fig. 4, the video image is shifted further to the left as compared to that of Fig. 7. It should be readily apparent that reassigning the end and start column counts in the reverse direction (to the left), the video image displayed shifts to the right. Similarly, reassigning the end and start row column counts up causes the displayed video image to shift down and reassigning the end and start counts down causes the displayed video image to shift up.

All changes in row or column address counters 5, 6 are preferably effected during either the horizontal or vertical blanking intervals so there is no noticeable jitter or tearing of the video image. Further, changes in either count sequence affect the entire displayed image so the counters should be changed only during a vertical blanking interval.

The microcontroller within each video module has the ability to read or write any RGB data byte within the video RAM matrix. Although any byte might be read or modified at any time, only the pixel data along a leading or trailing edge would be operated on.

To make an image scroll from right to left across a monitor screen, the RAM display column counters are incremented one or more pixel counts at a time in between normal display periods.

The speed of scrolling is dependent on the frequency that the display counters are updated. A 360 pixel wide display at a rate of 60 displays per second would require the pixel address counters be incremented (or decremented) by 6 during each vertical retrace in order for an image to scroll completely across the screen in one second. Changing the counters by 3 during each vertical retrace would give a two second scroll time, changing by 1 a six second time and so on.

In order for a video image to transpose from the left most column edge of one display to the right most column edge of the next monitor, the corresponding pixel data must be copied from one video module to the next.

During a scrolling interval, the microcontroller in each video module reads the pixel data along the left most column of the current image, converts them into a serial data stream and transmits the data to the next module to the left through an RS422 serial link. At the same time, serial data from the next video module to the right is arriving through a second RS422 serial link. This data is assembled into RGB pixel data bytes and stored along the right most column edge of the current image. The serial data rate is application specific and is determined by the maximum speed at which the image must be scrolled across.

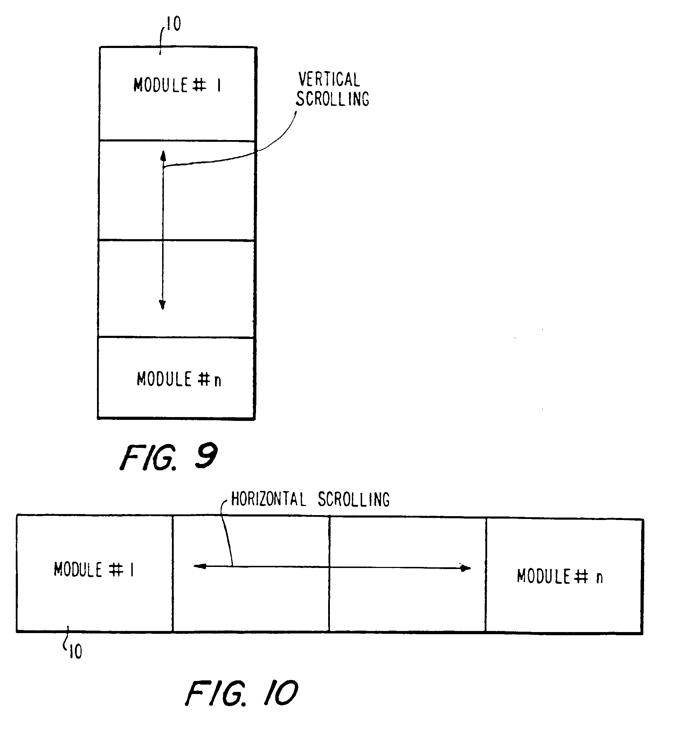

Based on the foregoing discussion regarding image shifting, a video moving message display system composed of any number of video modules stacked horizontally side by side may be employed in which the video frames may be shifted or scrolled linearly left or right by one or more pixel rows, from one module to the next in sequence as illustrated in Fig. 9. The entire display may be stepped left or right in increments of one pixel resolution. Similarly, by stacking the modules vertically on top of each other, a similar effect is achieved by shifting or scrolling the video images up or down by one pixel line as illustrated in Fig. 10. The modules of Figs. 9 and 10 may be combined to enable scrolling both horizontally and vertically from one module to the next in succession.

There is a finite period of about 1.33 milliseconds of vertical blanking time during which the complete memory transfer is to be accomplished between modules in sequence. For this reason, it is fortuitous in the preferred embodiment that visual shifting of the image by one pixel column may be implemented by changing memory address counters so that only one column of data on each edge of the video needs to be changed for one pixel scrolling of the image. Of course, it is also within the scope of the invention to visual shift the image by two or more pixel columns or rows at a time. If such a transfer is effected within the vertical blanking time interval, the transition of the image as viewed from one video monitor to the next may appear to jump by the block of pixels during each vertical blanking time interval. The visual shifting of an image within memory could also be produced by a computer memory management unit, a graphics coprocessor, or by moving every byte in the memory array individually.

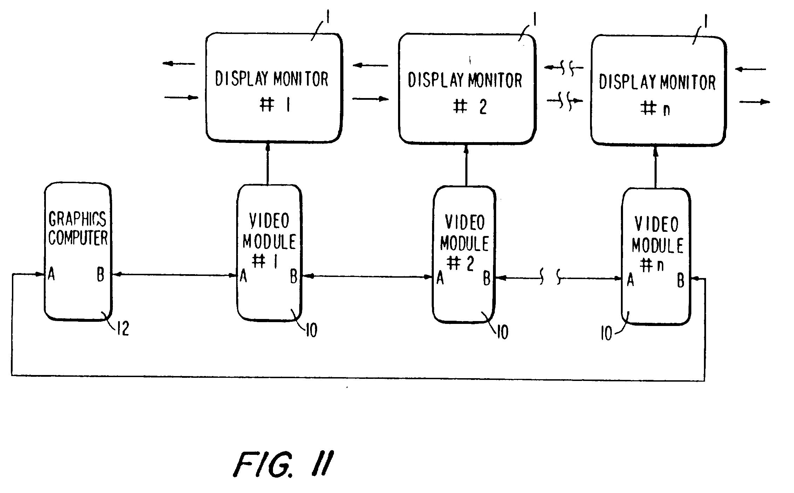

Fig. 11 depicts the overall arrangement of multiple video scrolling modules of the type of Fig. 1 interconnected with each other. There is one graphics computer 12 and a plurality of video modules 10 arranged in cascade. Each video module 10 constitutes the hardware processing unit 2 of Fig. 1 and controls the display of a respective display monitor 1.

A video graphics source for the entire chain of video modules 10 is provided by the graphics based computer 12, which contains a display memory in a similar format to each display module. In the preferred embodiment for RGB, there are 360 x 240 pixels. For this hardware description, an Amiga 2500 computer is satisfactory. This graphics computer 12 builds and stores digitized video images in an internal set of RAM matrices. By serializing the digital image data and transmitting it directly through an RS422 serial link to the first module of the scrolling array, it is not necessary to digitize an analog video signal. This eliminates some extra hardware and one source of possible image distortion.

A single data link which chains one video module 10 to the next may be employed to maintain the video moving message system of the present invention. Both pixelized video data and module control commands may be passed through the same links.

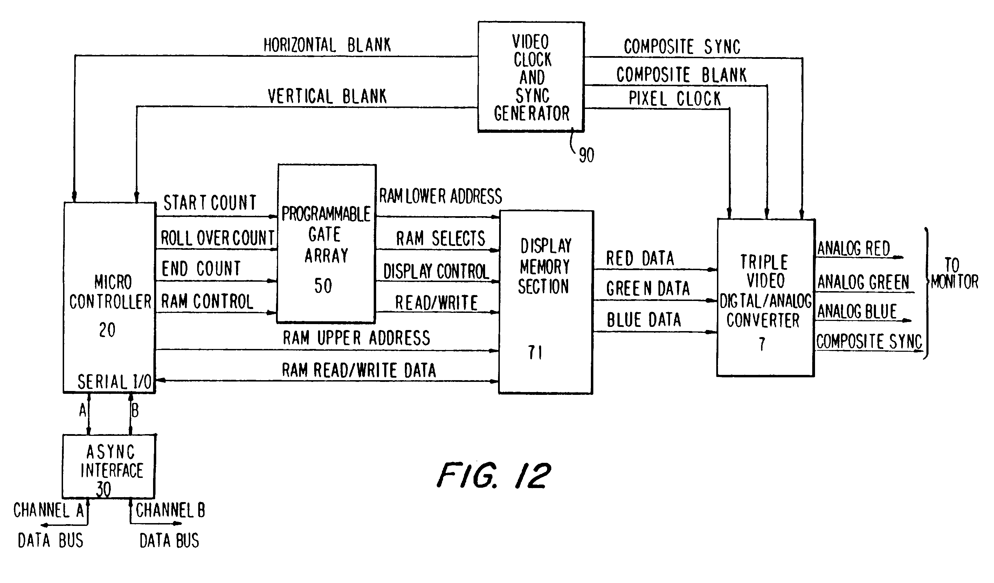

Fig. 12 shows a preferred video module 10 internal layout. There is a microcontroller 20, asynchronous interface 30, programmable gate array 50, a display memory section 71, triple video digital to analog converter 7, a video clock and sync generator 90, and interconnections between the components.

The asynchronous interface 30 buffers serial data from ASCO and ASC1 through serial current drivers and receivers to provide an IEEE RS422 serial link between successive video modules 10. Again, other serial or parallel protocols may be used as dictated by speed requirements. Interface 30 may be in the form of two interfaces, e.g., a Motorola MC3487 with serial current drivers and a Motorola MC3486 with serial current receivers.

Thus, one of two successive video modules 10 may be considered to be interfacing data bidirectionally via channel A with respect to one serial current driver and receiver and the other of the two successive video modules 10 interfaces data bidirectionally via channel B with respect to another serial current driver and receiver. The successive video modules communicate with each other using digital binary coding.

The microcontroller 20 communicates with the video modules 10 via the asynchronous interface 30 bidirectionally through corresponding channel A and B lines. Baud rate and data parameters may be controlled by software.

Microcontroller 20 may be a Hitachi HD647180X microcontroller, which is a self contained computer on a chip. Contained within this device is a microprocessor, instruction control ROM, internal work RAM, two asynchronous serial ports, and 54 general purpose parallel input/output lines. The HD647180X provides all of the control functions needed for the microprocessor control unit 4 of a scrolling message display module. Both asynchronous serial ports may be configured as eight data bits and 44,700 baud. Of course, the microcontroller may also be a personal computer or any other computer system.

The video clock and sync generator includes a video sync generator and a buffered 14.31818 MHZ system clock generated by a crystal oscillator attached to the video sync generator 24. Internally, the microcontroller 20 divides the 14 MHz system clock by 2 to provide a 7 MHz operations clock. The 7 MHz is further divided down within the microcontroller 20 by a factor of 160 to generate a 44.74 khz baud rate clock oscillator, which is accrued via the two asynchronous serial ports of the microcontroller 20.

Two hardware interrupts may be used to signal the microcontroller 20 of the start of vertical blank drive and horizontal blank drive, respectively, which originate at the video sync generator. When activated, the interrupt lines cause the execution of the appropriate blanking operations in the controller software. The vertical interrupt always has highest priority.

Parallel input/output lines of the microcontroller 20 are configured to control access to the video display RAM 3. Control lines are grouped as eight bit bidirectional ports. Three ports set parameters for the pixel column counter. Another port forms the input for the display RAM chip select decoders. Another six ports form the upper six address lines for the display RAM. Another port forms the display RAM bidirectional data buss. Motorola 74F244 line drivers may be used to boost all signals going to multiple video display RAMs in parallel.

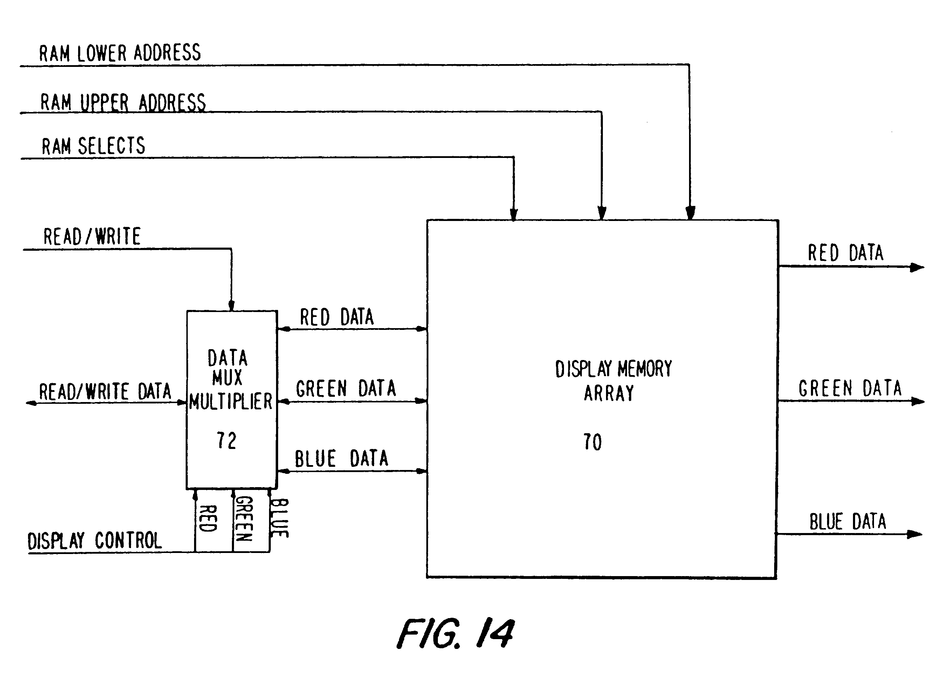

As shown in Fig. 14, the programmable gate array 50 has internal logic which includes a comparator 52, a comparator 54 and a counter 56 which form a nine bit binary counter with programmable start count, end count, and roll over back to zero count. The outputs of the nine bit binary counter form the lower 9 bits of the display memory address lines. These bits correspond to the RAM pixel position within a given display line. Nine bits provide for a possible 512 pixel positions within each row. Using a clock rate of 7.159 MHZ, only 360 of the 512 positions need be used. The counter 56 counts out a pattern of 360 RAM lower addresses during each active video display line. The lower nine address count sequence is the same for each line in a given video image, so it is only necessary to change the sequence if the visual image is to be changed, i.e., scrolled. The pixel count would only be changed during a vertical blanking interval when image display would not be interrupted.

Each line in an image may be different by generating a unique upper display RAM address for each line and forcing pixel data to be read from a different block of memory. The upper address lines are modified and the lower address count sequence restarted during the horizontal blanking interval between each display line.

The nine bit start address, rollover address, and end address components are output on the microcontroller ports during a vertical blanking interrupt. These will remain constant until at least the next vertical interrupt.

During a blanking interval, the microcontroller 20 brings one port line low then high, latching the current line start address present into counter 56. At the beginning of an active line of video, both horizontal drive and vertical drive signals go to a high state, causing the clock enable signal to also go high which enables the counter 56. Each 7.159 MHZ clock cycle to the counter 56 increments the binary output count by one. A valid count sequence will be 360 counts long and can start at any count and end at any count. When the highest lower address in a sequence is reached, the next count must roll over back to zero.

There are nine inputs of comparator 54 which are set to binary output count from the microcontroller 20. When this count value is reached on nine inputs of the comparator 52, the end count line of the comparator 52 goes low, signaling the microcontroller 20 of an end for each display line. To cause a displayed video image to scroll left or right by one pixel, the start, roll over, and end count values must be incremented or decremented by one, respectively.

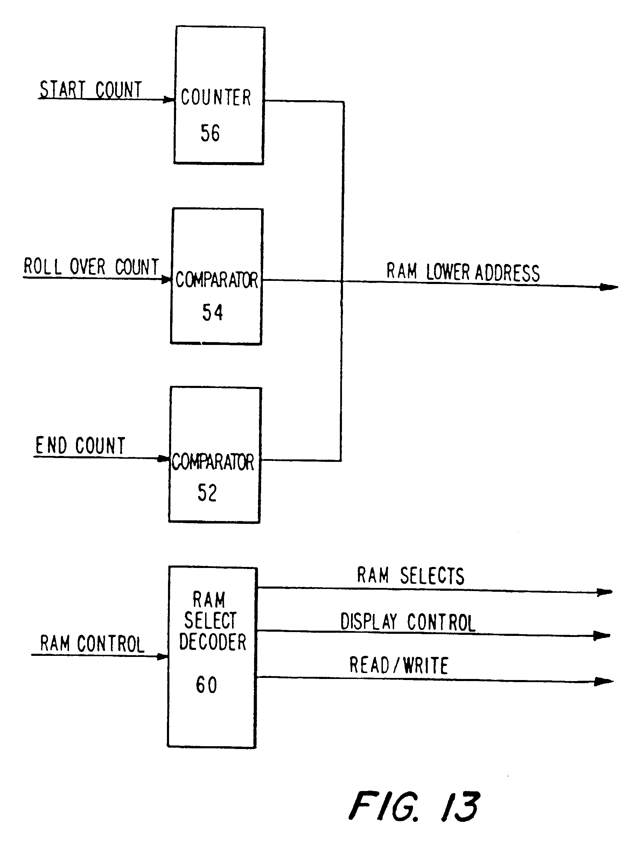

As shown in Fig. 13, the display memory section 71 has a multiplexer 72 and a display memory array 70, the latter of which is divided into groups of three colors, i.e. red, green and blue. There may be four banks for each color. Ram select decoder 60 selects one of the four RAM banks and selects one of the three colors. The decoder 60 has outputs which are logically mixed, e.g., by AND gates and OR gates, to generate RAM selects, one RAM select for each display memory array device. With four RAM banks of three colors, there may be 12 display memory array devices or video display RAMS.

Inputs for the decoder 60 come from the 64 port bits of microcontroller 20. RAM bank and color selections occur only once for each video line and are modified only during a horizontal blanking interrupt. In this manner, decoding is effected with respect to whichever one of the twelve video display RAMs is being accessed by the nine lower RAM address lines.

Decoder 60 may be considered to have a RAM bank select decoder and a RAM color select decoder. The RAM color select decoder receives two binary inputs, RGB-LOW and RGB-HIGH from the microcontroller 20 and has provisions to output four binary outputs, namely, R, G, B and RGB signals. The abbreviation RGB designates red, green and blue data. Each of the outputs R, G, B may be input to respective AND gates, with the output RGB being an input also to each of the respective AND gates. The output from each of the AND gates may be an input to respective groups of four OR gates. Each group of four OR gates receives an input from a respective bank select output from the RAM bank select decoder, which receives bank-low and bank-high binary inputs from the microcontroller 20. The output from the OR gates may be received by a respective video display RAM.

Two modes of video display RAM access are recommended. During the normal display mode the Red, Green, and Blue video memory array devices are read at the same time, each bank receiving the same pixel address in parallel. In this mode, the microcontroller 20 places a high signal on inputs RGB-LOW and RGB-HIGH to decoder 60 simultaneously. Output RGB of decoder 60 goes low and so do the three AND gate outputs. In this mode, one RAM chip select line from each of the Red, Green and Blue groups after the OR gates are selected together, allowing parallel display access. A second memory mode is recommended for the microcontroller to randomly read or write any single byte of display memory in the scrolling process. By setting the inputs to decoder 60 so that RGB-LOW and RGB-HIGH are not both high together, only one color R, G, or B will be selected, allowing for access to only one video display RAM at a time.

The display memory array 70 may be composed of twelve Texas Instruments 65256 32K x 8 static video display RAM devices. Each RAM has 15 address lines. The lower 9 addresses are generated within the programmable gate array 50 and the upper 6 addresses are generated directly by the microcontroller 20.

The preferred microcontroller 20 is capable of reading or writing only eight bits of data during a single operation. RAM data lines for each of the three color groups are hooked together in parallel in order to drive their respective output circuits during active display periods. Only one RAM chip select in a color group is to be active at a time.

The multiplexer 72 provides a bidirectional read/write data path between the microcontroller 20 and the video memory array. The microcontroller can only communicate with one byte of video ram during any one memory access cycle. A multiplexer 72 composed of three buss transceivers, such as Motorola 74HC245, can be used to prevent data contentions (i.e., simultaneous receipt of data from multiple sources) by selecting data from only one color area of RAM at a time. During active display times, the multiplexer disconnects the microcontroller from video RAM completely so as to avoid interfering with the generation of video.

An input to a transceiver causes an A and B buss to be connected together when in the high state or isolated when in the low state. Data flow direction is controlled by the state of a DIR input pin. Pin inputs of transceivers may be connected to R, G, and B outputs of the programmable gate array logic. The microcontroller 20 may determine which color data buss to select by selecting the proper color select decoder inputs. During an active display mode period, all three inputs R, G, and B are high. This completely isolates the microcontroller 20 from the display RAM bidirectional data buss.

Each video display RAM has a read/write enable line to select whether it is in a read or write mode. The write enable line from all video display RAMs are connected in parallel to a single port line of the microcontroller 20 which sets the read or write state.

The digital to analog converter 7 includes a NTSC video Sync Generator and a triple video RGB digital to analog converter. The entire video display module system timing may be derived from the outputs of a Fairchild 3262B video sync generator. A crystal oscillator of four times the NTSC subcarrier or 14.31818 MHZ is split into a dual phase clock output by gates and fed to inputs of the video sync generator. From this source frequency, the video sync generator 90 generates the NTSC signals of even field, vertical drive, horizontal drive, composite sync, and composite blank. The horizontal and vertical drive signals are used as status interrupts to the microcontroller 20 to initiate the proper software subroutines. The composite blank and composite sync signals are used by the output digital to analog converter 7 to generate sync signals for the analog RGB output.

The triple video RGB digital to analog converter 7 may be a Brooktree BT101 Triple D/A converter, which is used to generate the final analog video signal. Eight bits of red, green, and blue data are fed directly from the display memory outputs. The 14.31818 crystal frequency may be divided in half to provide a pixel clock frequency of 7.159MHZ. The pixel clock, blanking, and sync signals are mixed with the analog signal generated from the digital RGB data to form an analog RGB video within the converter 7. The converter 7 may directly drive the inputs of a display monitor 1.

It is another embodiment to remove the graphics computer 12 from the feedback loop after image data stored therein is transmitted to the end video module and to thereafter interconnect the end video modules in the cascade. This may be done by use of a simple multi-directional switch or else by the actual physical removal of the graphics computer and then replacement with interconnection between the end video modules. In this manner, the image data being transmitted will be continuously looped around the entire circuit. It is preferred, however, to generate the image data continuously from the graphics computer, to avoid the possibility of glitches which may arise that distort the image data. Thus, distorted images will be terminated to avoid repeatedly looping the distorted images for display around the entire circuit.

It is preferred that the video modules 10 transfer image data between themselves independent of the graphics computer 12, because any number of video modules may be employed without the need to redefine the software on the graphics computer 12 concerning the upper limit of video modules which the graphics computer may handle. However, the graphics computer 12 itself may provide image data to each of the video modules directly; that is, the graphics computer 12 may perform the functions of all the microcontrollers 20 in the video module 10. Scrolling of the image from one video monitor to the next is thoroughly effected through the graphics computer. Each module can also generate its own independent graphics images or color planes under supervisory control of the main computer.

In addition, control command data may be transmitted with the image data which causes the microcontrollers to respond in a particular way, e.g., to decode which image data should be displayed when image data is between transmitted through different channels into the same video module from the graphics computer, i.e., via opposite ends of the cascade. The command data may also be used to vary the color of the display or change the image itself from any given monitor.

Of course, the video monitor may display black and white instead of color; further, the picture on the screen of the video monitor may arise by controlling a cathode ray tube, colored excitable gases, colored lights or any one of a number of display technologies common to televisions with flat screen displays or computer monitors.

## Claims

1. A video moving message display system, comprising:
means for generating image data;
a plurality of video monitors (1);
a plurality of video modules (2) each in communication with at least a respective one of said display monitors; and
means for transferring the image data from one of said video modules (2) to the next in succession by reassigning counters (5,6) through which the image data is accessed to form the image, said video modules successively displaying an image based on the transferred image data so that said image scrolls from one video monitor (1) to the next in succession, said transferring means being independent of said generating means when transferring the image data.

2. A system as claimed in claim 1, in which said transferring means causes said image to appear to scroll in a predetermined direction by at least one pixel width from one video monitor to the next during a blanking interval of said video monitors (1).

3. A system as claimed in claim 1, in which said video monitors (1) are stacked one over the other.

4. A system as claimed in claim 1, in which said video monitors are arranged side by side (1).

5. A system as claimed in claim 1, in which a first plurality of said video monitors (1) are stacked one over the other and a second plurality of said video monitors (1) are arranged side by side, at least one of said video monitors of said first and second being the same.

6. A video message display system as claimed in claim 1, in which each video display module (2) has an associated video RAM (3) which stores image data corresponding to a respective pixel of the associated video monitor (1), video RAM address means (5,6) and control means (4) which controls a start address value of image data to cause the whole displayed image to scroll relative to the video monitors.

7. A system as claimed in claim 6, in which a related portion of the image data stored in the video RAM (3) associated with a first video monitor and relating to a portion of the displayed image at an edge of the first video monitor is transferred to the video RAM (3) associated with a second video monitor relating to a portion of the displayed image at an opposite edge of the second video monitor.

8. A system as claimed in claim 1, in which said video monitors (1) each have pixels and said video modules (2) each include video RAM (3) for storing the image data in a matrix of memory, counter means including column (6) and row (5) counters for accessing the image data in said matrix respectively with respect to column addresses and row addresses, means (20) for reassigning at least one of any of said row (5) and column counters (6) so as to change said addresses which are accessible by said counter means, reading means (60) for reading said image data by accessing the image data with said counter means in accordance with said column and row addresses and with respect to any reassignment by said reassigning means, and means for sending the image data as read by said reading means to said pixel of said video monitor (1) in correspondence with said column and row addresses before and after said reassignment by said reassignment means, said video monitor (1) displaying an image in response to said sending means and having blanking intervals during which the image shifts by at least one pixel in a predetermined direction after each reassignment, said pixels of said video monitors being in correspondence with said column and row addresses of said video modules respectively.

9. A system as claimed in claim 1, in which said video modules (2) each includes a microcontroller (20), a display memory array (70), an asynchronous interface (30) in bidirectional communication with said microcontroller and with at least another of said video modules, a programmable gate array (50) in communication with said microcontroller and with said display memory array, a triple video digital to analogue converter (7) in communication with said display memory array and a video clock generator and a video sync generator (90), said microcontroller being in communication with both of said generators (90) and in bidirectional communication with said display memory array, said triple video digital to analogue converter also being in communication with a respective one of said video monitors.

10. A system as claimed in claim 9, in which said programmable gate array (50) includes two comparators (52, 54) and a counter (56) for providing address information and includes means (60) for decoding colour selection to be displayed on said video monitor.

11. A system as claimed in claim 1, further comprising means (12) for supplying image data to at least one of said video modules (2), said transferring means being independent of said supplying means.

12. A method of displaying a video moving message on a plurality of video monitors (1), each video monitor (1) being associated with at least one respective video module (2), the method comprising the steps of:
generating image data;
transferring the image data in succession from one of the video modules to the next independent of the step of generating; and
displaying an image on the plurality of video monitors successively based on the transferred image data from each of the video modules so that the image scrolls from one video monitor to the next in succession by reassigning counters through which the image data is accessed to form the image.

13. A method as claimed in claim 12, further including the step of arranging the video monitors (1) side by side.

14. A method as claimed in claim 12, further including the step of arranging the video monitors (1) one over the other.

15. A method as claimed in claim 12, further including the steps of supplying the image data from a source (12) to at least one of the video modules, and the step of transferring including transferring the image data from one video module to the next independent of the source.

16. A method as claimed in claim 12, further including the steps of:
storing the image data in a matrix of memory (3);
accessing said image data in said matrix with respect to column addresses and row addresses via column counters (6) for accessing said column addresses and row counters (5) for accessing said row addresses;
reassigning at least one of any of said row and column counters so as to change said addresses which are accessible by said counters;
reading said image data by accessing said image data with said counters in accordance with said column and row addresses and with respect to any reassignment by said reassigning means;
sending said image data as read by said reading means to pixels of a video monitor (1) in correspondence with said column and row addresses before and after said reassignment;
displaying an image on the video monitor in response to the sending; and
after each reassignment, transferring the image data between the video monitors in succession during a blanking interval of the video monitors so that the image appears to scroll by at least one pixel at a time from one video monitor to the next in succession.

## Patentansprüche

1. System zur Anzeige von Videolaufbildern, das umfaßt:
eine Einrichtung zum Erzeugen von Bilddaten;
eine Mehrzahl Videobildmonitore (1);
eine Mehrzahl Videomodule (2), von denen jeder zumindest mit jeweils einem der genannten Videobildmonitore in Verbindung ist;
eine Einrichtung zur Übertragung der Bilddaten von einem der genannten Videomodule (2) auf den nächsten in Folge, indem Zähler (5, 6) erneut zugeordnet werden, durch die auf die Bilddaten zugriffen wird, um das Bild zu bilden, wobei die genannten Videomodule aufeinanderfolgend ein Bild auf der Grundlage der übertragenen Bilddaten anzeigen, so daß sich das genannte Bild von einem Videobildmonitor (1) zu dem nächsten in der Folge bewegt, wobei die genannte Übertragungseinrichtung unabhängig von der genannten Erzeugungseinrichtung ist, wenn die Bilddaten übertragen werden.

2. Ein System, wie in Anspruch 1 beansprucht, in dem die genannte Übertragungseinrichtung bewirkt, daß sich das Bild in einer vorbestimmten Richtung um zumindest eine Pixelweite von einem Videobildmonitor zu dem nächsten während eines Austastintervalls der genannten Videobildmonitore (1) zu bewegen scheint.

3. Ein System, wie in Anspruch 1 beansprucht, in dem die genannten Videobildmonitore (1) übereinander gestapelt sind.

4. Ein System, wie in Anspruch 1 beansprucht, in dem die genannten Videobildmonitore (1) nebeneinander angeordnet sind.

5. Ein System, wie in Anspruch 1 beansprucht, in dem eine erste Mehrzahl der genannten Videobildmonitore (1) übereinander gestapelt ist und eine zweite Mehrzahl der genannten Videobildmonitore (1) nebeneinander angeordnet ist, wobei zumindest einer der genannten Videobildmonitore der genannten ersten und zweiten Mehrzahl derselbe ist.

6. Ein Videobildanzeigesystem, wie in Anspruch 1 beansprucht, in dem jeder Videoanzeigemodul (2) einen verbundenen Video RAM (3), der Bilddaten entsprechend einem jeweiligen Pixel des verbundenen Videobildmonitors (1) speichert, eine Video RAM Adresseneinrichtung (5, 6) und eine Steuereinrichtung (4) aufweist, die einen Startadressenwert der Bilddaten steuert, damit sich das gesamte angezeigte Bild in bezug auf die Videobildmonitore bewegt.

7. Ein System, wie in Anspruch 6 beansprucht, in dem ein bestimmter Abschnitt der Bilddaten, der in dem Video RAM (3) gespeichert ist, der mit einem ersten Videobildmonitor verbunden ist, und der sich auf einen Abschnitt des angezeigten Bildes an einem Rand des ersten Videobildmonitors bezieht, zu dem Video RAM (3) übertragen wird, der mit einem zweiten Videobildmonitor verbunden ist, der sich auf einen Abschnitt des angezeigten Bildes an einem gegenüberliegenden Rand des zweiten Videobildmonitors bezieht.

8. Ein System, wie in Anspruch 1 beansprucht, in dem die genannten Videobildmonitore (1) jeweils Pixel aufweisen und die genannten Videomodule (2) jeweils umfassen einen Video RAM (3) zum Speichern der Bilddaten in einem Matrixspeicher, eine Zählereinrichtung, die Spalten- (6) und Zeilenzähler (5) zum Zugriff auf die Bilddaten in der genannten Matrix jeweils in bezug auf die Spaltenadressen und die Zeilenadressen umfaßt, eine Einrichtung (20) zur Wiederzuordnung zumindest von einem genannten Zeilen- (5) oder Spaltenzähler (6), damit die genannten Adressen geändert werden, auf die von der genannten Zählereinrichtung zugreifbar ist, eine Leseeinrichtung (60), um die genannten Bilddaten zu lesen, indem auf die Bilddaten mit der genannten Zählereinrichtung gemäß den genannten Spalten- und Zeilenadressen und in bezug auf irgendeine Wiederzuordnung durch die genannte Wiederzuordnungseinrichtung zugriffen wird, und eine Einrichtung, um die Bilddaten, wie sie durch die genannte Leseeinrichtung gelesen wurden, zu dem genannten Pixel des genannten Videobildmonitors (1) in Entsprechung zu den genannten Spalten- und Zeilenadressen vor und nach der genannten Wiederzuordnung durch die genannte Wiederzuordnungseinrichtung zu übermitteln, wobei der genannte Videobildmonitor (1) ein Bild in Reaktion auf die genannte Sendeeinrichtung anzeigt und Austastintervalle aufweist, während der sich das Bild um zumindest ein Pixel in einer vorbestimmten Richtung nach jeder Wiederzuordnung verschiebt, wobei die genannten Pixel der genannten Videobildmonitore den genannten jeweiligen Spalten- und Zeilenadressen der genannten Videomodule entsprechen.

9. Ein System, wie in Anspruch 1 beansprucht, in dem die genannten Videomodule (2) jeweils einen Mikrokontroller (20), ein Anzeigespeicherfeld (70), eine asynchrone Schnittstelle (30) in bidirektionaler Verbindung mit dem genannten Mikrokontroller und mit zumindest einem anderen der genannten Videomodule, eine programmierbare Gatter-Mehrfachanordnung (50) in Verbindung mit dem genannten Mikrokontroller und mit dem genannten Anzeigespeicherfeld, einen dreifachen Video-Digital/Analogwandler (7) in Verbindung mit dem genannten Anzeigespeicherfeld und einem Videotaktgenerator und einem Videosynchronisiergenerator (90) umfassen, wobei der genannte Mikrokontroller in Verbindung mit beiden genannten Generatoren (90) und in bidirektionaler Verbindung mit dem genannten Anzeigespeicherfeld ist und der genannte dreifache VideoDigital/Analogwandler ebenfalls mit einem entsprechenden der genannten Videobildmonitore in Verbindung ist.

10. Ein System, wie in Anspruch 9 beansprucht, in dem die genannte programmierbare Gatter-Mehrfachanordnung (50) zwei Vergleicher (52, 54) und einen Zähler (56) umfaßt, um Adresseninformationen zu liefern, und eine Einrichtung (60) zur Decodierung der Farbauswahl umfaßt, die auf dem genannten Videobildmonitor angezeigt werden soll.

11. Ein System, wie in Anspruch 1 beansprucht, das des weiteren eine Einrichtung (12) umfaßt, um Bilddaten zumindest einem der genannten Videomodule (2) zuzuführen, wobei die genannte Übertragungseinrichtung unabhängig von der genannten Zuführeinrichtung ist.

12. Ein Verfahren zum Anzeigen eines sich bewegenden Videobildes auf einer Mehrzahl Videobildmonitore (1), wobei jeder Videobildmonitor (1) mit zumindest einem entsprechenden Videomodul (2) verbunden ist, wobei das Verfahren die Schritte umfaßt:
Erzeugen von Bilddaten;
Übertragen der Bilddaten in Folge von einem der Videobildmonitore zu dem nächsten unabhängig von dem Erzeugungsschritt; und
Anzeigen eines Bildes auf der Mehrzahl Videobildmonitore aufeinanderfolgend auf der Grundlage der übertragenen Bilddaten von jedem der Videomodule, so daß sich das Bild von einem Videomonitor zu dem nächsten in Folge bewegt, indem Zähler wiederzugeordnet werden, durch die auf die Bilddaten zugegriffen wird, um das Bild zu bilden.

13. Ein Verfahren, wie in Anspruch 12 beansprucht, das des weiteren den Schritt umfaßt, die Videobildmonitore (1) nebeneinander anzuordnen.

14. Ein Verfahren, wie in Anspruch 12 beansprucht, das des weiteren den Schritt umfaßt, die Videobildmonitore (1) übereinander anzuordnen.

15. Ein Verfahren, wie in Anspruch 12 beansprucht, das des weiteren die Schritte umfaßt, die Bilddaten von einer Quelle (12) zumindest einem der Videobildmonitore zuzuführen, und der Übertragungsschritt umfaßt, die Bilddaten von einem Videomodul zu dem nächsten unabhängig von der Quelle zu übertragen.

16. Ein Verfahren, wie in Anspruch 12 beansprucht, das des weiteren die Schritte umfaßt:
Speichern der Bilddaten in einer Speichermatrix (3);
Zugreifen auf die genannten Bilddaten in der genannten Matrix in bezug auf Spaltenadressen und Zeilenadressen mittels Spaltenzählern (6), um auf die genannten Spaltenadressen zuzugreifen, und Zeilenzählern (5), um auf die genannten Zeilenadressen zuzugreifen;
Wiederzuordnen zumindest des genannten Zeilen- oder Spaltenzählers, damit die genannten Adressen geändert werden, auf die durch die genannten Zähler zugreifbar ist;
Übermitteln der genannten Bilddaten, indem auf die genannten Bilddaten mit den genannten Zählern gemäß den genannten Spalten- und Zeilenadressen und in bezug auf irgendeine Wiederzuordnung durch die genannte Wiederzuordnungseinrichtung zugegriffen wird;
Senden der genannten Bilddaten, wie sie durch die genannte Leseeinrichtung gelesen worden sind, zu Pixeln eines Videobildmonitors (1) in Entsprechung mit den genannten Spalten- und Zeilenadressen vor und nach der genannten Wiederzuordnung;
Anzeigen eines Bildes auf dem Videobildmonitor in Antwort auf das Übermitteln; und
Übertragen der Bilddaten zwischen den Videobildmonitoren in Folge nach jeder Wiederzuordnung während eines Austastintervalls der Videobildmonitore, so daß sich das Bild zumindest jeweils um ein Pixel von einem Videobildmonitor zu dem nächsten in Folge zu bewegen scheint.

## Revendications

1. Système d'affichage de message vidéo défilant, comprenant :
un moyen pour générer des données d'image ;
une pluralité de moniteurs vidéo (1) ;
une pluralité de modules vidéo (2), chacun en communication avec au moins un moniteur correspondant desdits moniteurs d'affichage ; et
un moyen pour transférer les données d'image provenant d'un desdits modules vidéo (2) au suivant successivement, en réaffectant les compteurs (5,6) au travers desquels les données d'image sont retrouvées pour former l'image, lesdits modules vidéo affichant successivement une image basée sur les données d'image transférées, de sorte que ladite image défile d'un moniteur vidéo (1) au suivant successivement, ledit moyen de transfert étant indépendant dudit moyen de génération lors du transfert des données d'image.

2. Système selon la revendication 1, dans lequel ledit moyen de transfert fait que la ladite image apparaît comme défilant dans une direction prédéterminée d'au moins une largeur de pixel, depuis un moniteur vidéo au suivant, pendant une période d'extinction desdits moniteurs vidéo (1).

3. Système selon la revendication 1, dans lequel lesdits moniteurs vidéo (1) sont empilés les uns au-dessus des autres.

4. Système selon la revendication 1, dans lequel lesdits moniteurs vidéo sont disposés côte à côte (1).

5. Système selon la revendication 1, dans lequel une première pluralité desdits moniteurs vidéo (1) sont empilés les uns au-dessus des autres, et dans lequel une seconde pluralité desdits moniteurs vidéo (1) sont disposés côte à côte, au moins un desdits moniteurs vidéo de la première et de la seconde pluralité étant le même.

6. Système d'affichage de message vidéo selon la revendication 1, dans lequel chaque module d'affichage vidéo (2) comporte une RAM vidéo associée (3) qui stocke les données d'image correspondant à un pixel correspondant du moniteur vidéo associé (1), des moyens d'adresse de RAM vidéo (5,6), et un moyen de contrôle (4) qui contrôle la valeur d'une adresse de départ des données d'image pour faire défiler l'image affichée tout entière par rapport aux moniteurs vidéo.

7. Système selon la revendication 6, dans lequel la partie concernée des données d'image stockées dans la RAM vidéo (3) associée à un premier moniteur vidéo et concernant une partie de l'image affichée sur un bord du premier moniteur vidéo est transférée dans la RAM vidéo (3) associée à un second moniteur vidéo concernant la partie de l'image affichée sur un bord opposé du second moniteur vidéo.

8. Système selon la revendication 1, dans lequel lesdits moniteurs vidéo (1) comportent chacun des pixels et lesdits modules vidéo (2), chacun comprenant une mémoire RAM vidéo (3) pour stocker les données d'image dans une matrice de mémoire, des moyens de compteurs comprenant les compteurs de colonne (6) et de ligne (5) pour retrouver les données d'image dans la ladite matrice respectivement par rapport aux adresses de colonne et aux adresses de ligne, un moyen (20) pour réaffecter au moins un quelconque desdits compteurs de ligne (5) et de colonne (6) de façon à changer lesdites adresses qui sont accessibles par lesdits moyens de compteurs, un moyen de lecture (60) pour lire lesdites données d'image en retrouvant les données d'image avec lesdits moyens de compteurs en fonction desdites adresses de colonne et de ligne et en prenant en compte toute réaffectation par ledit moyen de réaffectation, et un moyen pour envoyer les données d'image telles que relues par ledit moyen de lecture au dit pixel dudit moniteur vidéo (1) en correspondance avec lesdites adresses de colonne et de ligne avant et après ladite réaffectation par ledit moyen de réaffectation, ledit moniteur vidéo (1) affichant une image en réponse au dit moyen d'envoi et présentant des périodes d'extinction pendant lesquelles l'image se décale d'au moins un pixel dans une direction prédéterminée après chaque réaffectation, lesdits pixels desdits moniteurs vidéo étant en correspondance avec lesdites adresses de colonne et de ligne desdits modules vidéo respectivement.

9. Système selon la revendication 1, dans lequel lesdits modules vidéo (2) comprennent chacun un microcontrôleur (20), une matrice de mémoire d'affichage (70), et une interface asynchrone (30) en communication bidirectionnelle avec ledit microcontrôleur et avec au moins un autre desdits modules vidéo, une matrice de portes programmable (50) en communication avec ledit microcontrôleur et avec ladite matrice de mémoire d'affichage, un triple convertisseur vidéo numérique vers analogique (7) en communication avec ladite matrice de mémoire d'affichage et un générateur d'horloge vidéo et un générateur de synchronisation vidéo (90), ledit microcontrôleur étant en communication avec lesdits deux générateurs (90) et en communication bidirectionnelle avec ladite matrice de mémoire d'affichage, ledit triple convertisseur vidéo numérique vers analogique étant aussi en communication avec un moniteur correspondant desdits moniteurs vidéo.

10. Système selon la revendication 9, dans lequel ladite matrice de portes programmable (50) comprend deux comparateurs (52,54) et un compteur (56) pour fournir les informations d'adresse, et comprend un moyen (60) pour décoder la sélection de couleurs à afficher sur ledit moniteur vidéo.

11. Système selon la revendication 1, comprenant en outre un moyen (12) pour fournir les données d'image à au moins un module desdits modules vidéo (2), ledit moyen de transfert étant indépendant dudit moyen de fourniture.

12. Procédé d'affichage d'un message vidéo défilant sur une pluralité de moniteurs vidéo (1), chaque moniteur vidéo (1) étant associé à au moins un module vidéo correspondant (2), le procédé comprenant les étapes consistant à :
générer des données d'image ;
transférer les données d'image successivement d'un des modules vidéo au suivant indépendamment de l'étape de génération ; et
afficher une image sur la pluralité de moniteurs vidéo successivement sur la base des données d'image transférées depuis chacun des modules vidéo, de sorte que l'image défile d'un des moniteurs vidéo au suivant successivement, en réaffectant les compteurs à travers lesquels les données d'image sont retrouvées pour former l'image.

13. Procédé selon la revendication 12, comprenant en outre l'étape consistant à disposer les moniteurs vidéo (1) côte à côte.

14. Procédé selon la revendication 12, comprenant en outre l'étape consistant à disposer les moniteurs vidéo (1) les uns au-dessus des autres.

15. Procédé selon la revendication 12, comprenant en outre les étapes consistant à fournir les données d'image depuis une source (12) à au moins un des modules vidéo, et l'étape de transfert comprenant le transfert des données d'image depuis un moniteur vidéo au suivant indépendamment de la source.

16. Procédé selon la revendication 12, comprenant en outre les étapes consistant à :
stocker les données d'image dans une matrice de mémoire (3) ;
retrouver lesdites données d'image dans ladite matrice en fonction des adresses de colonne et des adresses de ligne via les compteurs de colonne (6) pour retrouver lesdites adresses de colonne et lesdits compteurs de ligne (5) pour retrouver lesdites adresses de ligne ;
réaffecter au moins l'un quelconque desdits compteurs de ligne et de colonne, de façon à changer lesdites adresses qui sont accessibles par lesdits compteurs ;
relire lesdites données d'image en retrouvant lesdites données d'image avec lesdits compteurs en fonction desdites adresses de colonne et de ligne et en prenant en compte toute réaffectation par ledit moyen de réaffectation ;
envoyer lesdites données d'image telles que relues par ledit moyen de lecture aux pixels d'un moniteur vidéo (1) en correspondance avec lesdites adresses de colonne et de ligne avant et après ladite réaffectation ;
afficher une image sur le moniteur vidéo en réponse à l'envoi ; et
après chaque réaffectation, transférer les données d'image entre les moniteurs vidéo successivement pendant une période d'extinction des moniteurs vidéo, de sorte que l'image paraît défiler d'au moins un pixel à la fois depuis un moniteur vidéo au suivant successivement.
